(19) Europäisches Patentamt
European Patent Office
Office européen des brevets

(11) **EP 0 647 368 B1**

(12) **EUROPÄISCHE PATENTSCHRIFT**

(45) Veröffentlichungstag und Bekanntmachung des Hinweises auf die Patenterteilung:
**02.04.1997 Patentblatt 1997/14**

(21) Anmeldenummer: **93909887.7**

(22) Anmeldetag: **04.05.1993**

(51) Int Cl.[6]: **H02K 29/08**

(86) Internationale Anmeldenummer:
**PCT/EP93/01083**

(87) Internationale Veröffentlichungsnummer:
**WO 93/23911 (25.11.1993 Gazette 1993/28)**

(54) **VERFAHREN UND VORRICHTUNG ZUR MOTORREGELUNG**

PROCESS AND DEVICE FOR MOTOR CONTROL

PROCEDE ET DISPOSITIF DE REGLAGE DE MOTEURS

(84) Benannte Vertragsstaaten:
**DE ES FR GB IT**

(30) Priorität: **15.05.1992 DE 4215812**
**15.05.1992 DE 4215830**
**29.08.1992 DE 4228899**

(43) Veröffentlichungstag der Anmeldung:
**12.04.1995 Patentblatt 1995/15**

(73) Patentinhaber: **DEUTSCHE THOMSON-BRANDT GMBH**
**78048 Villingen-Schwenningen (DE)**

(72) Erfinder:
* **GLEIM, Günter**
**D-78052 Villingen-Schwenningen (DE)**
* **LINK, Hermann**
**D-78052 Villingen-Schwenningen (DE)**
* **GEIGER, Erich**
**D-78089 Unterkirnach (DE)**

(56) Entgegenhaltungen:
US-A- 3 986 086      US-A- 4 086 519
US-A- 4 223 261      US-A- 4 507 590
US-A- 4 521 815      US-A- 5 089 733

## Beschreibung

Die vorliegende Erfindung betrifft ein Verfahren gemäß dem Oberbegriff von Anspruch 1 und eine Vorrichtung gemäß dem Oberbegriff des Anspruchs 9.

Es ist bekannt, mehrsträngige Motoren derart anzusteuern, daß jeder Strang in vorgegebenen Zeiträumen, die abhängig sind von der Position des Motors, angesteuert, beispielsweise bestromt wird. Eine Motor-Ansteuerstufe, die die Motor-Ansteuersignale für den Motor erzeugt, wird von einer Regelstufe angesteuert, die von einem Sensor, der beispielsweise als optischer oder magnetischer Sensor ausgebildet ist, Signale erhält, die ein Maß sind für die Drehposition und/oder Drehgeschwindigkeit des Motors.

Ist der Sensor als Hall-Sensor ausgebildet, so erfolgt die Erzeugung von Regelsignalen zur Ansteuerung der Motor-Ansteuerstufe üblicherweise dadurch, daß Sensor-Signale von drei Hall-Sensoren einer Logikstufe zugeführt werden.

Hall-Sensoren sind für die Motorregelung allgemein bekannte Bauelemente. Durch ein erstes Paar von Anschlüssen wird ein Strom eingeprägt und an einem zweiten Paar von Anschlüssen können Meßsignale abgegriffen werden, die zueinander um 180 Grad phasenverschoben sind.

Das Dokument US-A-5 089 733 offenbart ein Verfahren und Schaltungen zur elektronischen Kommutierung eines Motors mit einem einzigen ortsfesten Ballsensor zur Gewinnung von Kommutierungssignalen. Dies wird durch eine besondere Ausgestaltung des Rotors mit zusätzlichen Impulsgebern bewirkt. Auch das Dokument US-A-4 507 590 schlägt eine Lösung zur Bildung von Kommutierrungssignalen mit einem einzigen Detektor vor. Durch Anordnung von mehreren parallelen Spuren an dem Rotor wird eine nahezu sinusförmige erste Steuerspannung für eine Wicklung des Motors erhalten. Die Steuersignale für die anderen Wicklungen werden durch geeignete Verzögerung des ersten Steuersignals erhalten.

Es ist die Aufgabe der vorliegenden Erfindung, eine Motoransteuerung und -regelung mit einem Hallsensor zu vereinfachen.

Diese Aufgabe wird gelöst durch ein Verfahren nach Anspruch 1 und eine Vorrichtung gemäß Anspruch 9.

Vorteilhafte Ausgestaltungen der Erfindung sind durch die Unteransprüche gekennzeichnet.

Erfindungsgemäß werden die Sensorsignale eines einzigen Hallsensors, auch MRH genannt, die üblicherweise um 180 Grad phasenverschoben sind, wie folgt aufbereitet und anschließend mittels einer Logik-Stufe ausgewertet.

Ersten Vergleichsmitteln, denen die beiden Sensorsignale zugeführt werden, bilden eine Differenz aus beiden Signalen und erzeugen ein Ausgangssignal eines ersten Wertes, beispielsweise logisch "high", wenn diese Differenz einen positiven Wert aufweist. In den Fällen, in denen die Differenz einen negativen Wert aufweist, wird ein Ausgangssignal mit einem zweiten Wert, beispielsweise logisch "low" erzeugt.

Zweite Vergleichsmittel erhalten eines der beiden Sensorsignale um einen ersten vorgegebenen Differenzwert potentialverschoben gegenüber dem anderen Sensorsignal. Diese beiden gegeneinander verschobenen Signale werden durch die zweiten Vergleichsmittel in ähnlicher Weise verarbeitet, wie die nicht zueinander verschobenen Signale durch die ersten Vergleichsmittel.

Dritte Vergleichsmittel erhalten ebenfalls eines der beiden Sensorsignale um einen zweiten Differenzwert potentialverschoben gegenüber dem anderen Sensorsignal. Diese beiden gegeneinander verschobenen Signale werden durch die dritten Vergleichsmittel in ähnlicher Weise verarbeitet, wie die nicht zueinander verschobenen Signale durch die ersten Vergleichsmittel.

Die von den Vergleichsmitteln erzeugten Ausgangssignale werden einer Logikstufe zugeführt, die Ansteuersignale für eine Motor-Ansteuerstufe erzeugt, die einen Elektromotor bestromt.

Die vorliegende Erfindung hat durch Verwendung eines einzigen Hallsensors anstelle von mehreren Hallsensoren die Vorteile, daß deren aufwendige Positionierung während eines Fertigungsprozesses oder Reparaturfalles stark reduziert werden kann. Weiterhin kann die Anzahl von erforderlichen Anschlüssen bei einer Signalaufbereitungs- und Auswertestufe reduziert werden. Das ist insbesondere dann von Vorteil, wenn diese Stufe als integrierte Schaltung (IC) realisiert ist.

Einer ersten Weiterbildung der Erfindung liegen folgende überlegungen zugrunde.

Es ist bekannt, mehrsträngige Motoren derart anzusteuern, daß jeder Strang in vorgegebenen Zeiträumen, die abhängig sind von der Position des Motors, angesteuert, beispielsweise bestromt wird. Eine Motor-Ansteuerstufe, die die Motor-Ansteuersignale für den Motor erzeugt, wird von einer Regelstufe angesteuert, die von einem Sensor Signale erhält, die ein Maß sind für die Drehposition und/oder Drehgeschwindigkeit des Motors.

Es ist ein zu erzielender Vorteil der genannten Version, eine Motoransteuerung und -regelung der genannten Art derart weiterzuentwickeln, daß die erzeugte Verlustleistung verringert wird.

Der Vorteil wird erzielt, indem das Signal eines Sensors, der die Drehzahl eines Elektromotors erfaßt, von einer Regelstufe ausgewertet wird und indem aufgrund eines Vergleiches von Soll- und Istwerten, entsprechend der Drehzahl, ein Ansteuersignal für eine Motor-Ansteuerstufe erzeugt wird. Die Weiterbildung zeichnet sich dadurch aus, daß einzelnen Stufen zur Motoransteuerung, wie beispielsweise der genannten Motor-Ansteuerstufe, eine Versorgungsspannung zugeführt wird, die im wesentlichen ungeregelt sein kann, das heißt sich innerhalb eines weiten Spannungsbereiches befinden kann.

Dadurch kann die Anzahl von Bauelementen reduziert werden und die Erzeugung von Verlustleistung wird reduziert.

Wird mehr als ein Motor angesteuert, so wird der Vorteil der verminderten Verlustleistung noch deutlicher.

Erfolgt die Ansteuerung der Motoren durch einen getakteten Betrieb, wie durch ein Puls-Weiten-Signal, ein Puls-Längen-Signal oder dergleichen, so kann die Verlustleistung, die in der Motor-Ansteuerstufe erzeugt wird, weiter verringert werden. In diesem Fall ist es möglich, die Motor-Ansteuerstufen von mehreren Motoren in einem einzigen Gehäuse, beispielsweise als integrierte Schaltung, als Hybrid-Schaltung oder dergleichen, zu integrieren.

Eine zweite Weiterbildung der Erfindung umfaßt folgende überlegungen.

Es ist allgemein bekannt, daß Elektromotoren mit mehreren Strängen derart bestromt werden, daß in Abhängigkeit von der Drehposition einer oder mehrere dieser Stränge mit einem Motor-Ansteuersignal angesteuert werden, was allgemein als Kommutierung bezeichnet wird. Es ist ebenfalls bekannt, daß für die Kommutierung ein oder mehrere Sensoren vorgesehen sind, die die Position des Motors erfassen. Aufgrund dieser Sensorsignale werden Ansteuersignale für den Motor bestimmt.

Es ist weiterhin bekannt, für eine genaue Regelung der Drehgeschwindigkeit, auch Drehzahl genannt, eines Motors einen weiterenen Sensor vorzusehen, dessen Auflösung wesentlich höher ist, als die des Kommutierungs-Sensors.

Für die Optimierung eines Systems, bestehend aus einem Motor und entsprechenden Ansteuerstufen, bezüglich der Kommutierung ist ein entsprechender Abgleich erforderlich. Dabei werden unter anderem Verzögerungen, wie sie beispielsweise innerhalb der Ansteuerstufen oder durch eine ungenaue Sensormontage entstehen, dadurch kompensiert, daß die Ansteuersignale zur Bestromung des Motors vorzeitig erzeugt werden. Es hat sich inzwischen herausgestellt, daß ein derartiger, in der Regel einmaliger, Abgleich nicht ausreichend ist für eine gute Kommutierung eines Elektromotors.

Es ist somit ein zu erzielender Vorteil der betrachteten Weiterbildung, eine verbesserte Kommutierung zu ermöglichen.

Zur Erzielung dieses Vorteils wird vorgeschlagen, den Zeitpunkt der Erzeugung der Steuersignale zu bestimmen aufgrund von Sensorsignalen, die ein Maß sind für die Drehposition des Motors und aufgrund von Korrekturwerten, die ein Maß darstellen für zeitliche und/oder drehwinkelabhängige Verschiebungen der Sensorsignale. Diese Korrekturwerte können bestimmt werden beispielsweise während eines Fertigungsprozesses, einer Wartung oder dergleichen, oder aber durch Optimierung von Betriebsgrößen, wie beispielsweise der Minimierung des Stroms, mit dem der Motor angesteuert wird.

Bei einigen heute bekannten Systemen stehen mehrere Arten von Sensorsignalen zum Betrieb des Motors zur Verfügung. So dienen bei diesen bekannten Systemen beispielsweise Signale von einem Sensor oder mehreren Sensoren einer ersten Gruppe, die eine relativ grobe Auflösung aufweisen bezüglich der Drehposition, zur Erzeugung der Motor-Kommutierung. Signale von einem oder mehreren Signalen von Sensoren einer zweiten Gruppe, die eine wesentlich feinere Auflösung aufweisen als die Sensoren der ersten Gruppe, dienen zur Bestimmung der Drehzahl bzw. des Drehwinkels.

Die Signale der zweiten Sensorgruppe können bei einer Ausgestaltung der Erfindung dafür verwendet werden, den Zeitpunkt zur Erzeugung der Steuersignale zu korrigieren.

Weitere Merkmale, Vorteile und Einzelheiten der Erfindung werden in den folgenden Ausführungsbeispielen anhand der Zeichnung erläutert. Dabei zeigen:

Fig. 1    ein erstes Ausführungsbeispiel der erfindungsgemäßen Vorrichtung;
Fig. 2    Diagramme von Steuersignalen des Ausführungsbeispiels nach Fig. 1;
Fig. 3    ein erstes Ausführungsbeispiel zu der ersten Weiterbildung;
Fig. 4    Diagramme von Steuersignalen des Ausführungsbeispiels nach Fig. 3;
Fig. 5    ein zweites Ausführungsbeispiel zu der ersten Weiterbildung ;
Fig. 6    prinzipielle Spannungsversorgung nach dem Stand der Technik und gemäß dem Ausführungsbeispiel nach Fig. 3;
Fig. 7    ein erstes Ausführungsbeispiel zur zweiten Weiterbildung mit einer zeitlichen Korrektur;
Fig. 8    Diagramme von Signalverläufen gemäß dem Ausführungsbeispiel der Figur 7;
Fig. 9    das Flußdiagramm eines bevorzugten Verfahrens gemäß dem Ausführungsbeispiel der Figur 7;
Fig. 10   ein zweites Ausführungsbeispiel zur drehwinkelabhängigen Ko-rrektur.

Bevor auf die Beschreibung der Ausführungsbeispiele näher eingegangen wird, sei darauf hingewiesen, daß die in den Figuren einzeln dargestellten Blöcke lediglich zum besseren Verständnis der Erfindung dienen. üblicherweise sind einzelne oder mehrere dieser Blöcke zu Einheiten zusammengefaßt. Diese können in integrierter oder Hybridtechnik bzw. als programmgesteuerter Mikrorechner oder als Teil eines zu seiner Steuerung geeigneten Programmes realisiert sein.

Die in den einzelnen Stufen enthaltenen Elemente können jedoch auch getrennt ausgeführt werden.

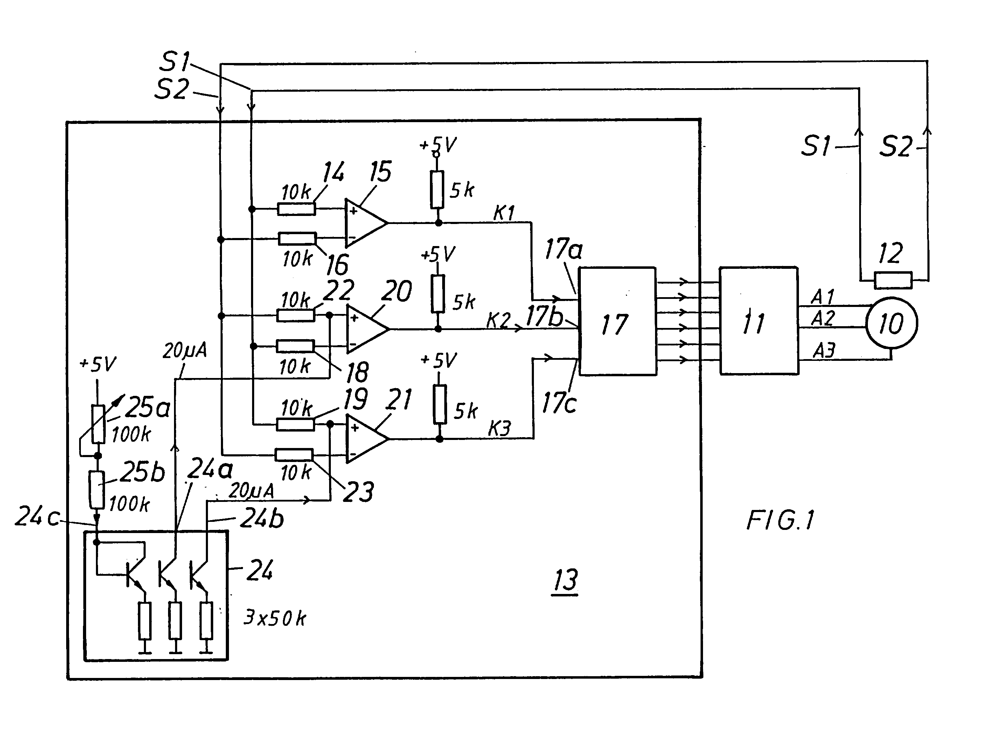

Fig. 1 zeigt einen mehrsträngigen Motor 10 dessen Stränge, von einer Motor-Ansteuerstufe 11 durch Ansteuersignale A1, A2, A3 betromt werden. Die Drehposition p und die Drehzahl n des Motors 10 werden durch einen Hallsensor 12 erfaßt, und zwei Sensorsignale S1 und S2 werden an eine Regelstufe 13 weitergeleitet. Hier wurden nur die Sensoranschlüsse des Sensors 12 dargestellt. Die Anschlüsse, über die ein Strom eingeprägt wird, wurden der übersichtlichkeit nicht dargestellt.

Das Signal S1 wird über einen Widerstand 14 dem positiven, d.h. nicht-invertierenden, Eingang eines ersten Komparators 15 zugeführt. Das Signal S2 wird über einen Widerstand 16 dem invertierenden Eingang des Komparators 15 zugeführt, über dessen Ausgangssignal das Signal K1 zu dem ersten Eingang 17a einer Logigstufe 17 geführt wird.

Weiterhin wird das Signal S1 über entsprechende Widerstände 18 bzw. 19 dem invertierenden Eingang eines zweiten Komparators 20 und dem positiven Eingang eines dritten Komparators 21 zugeführt. Entsprechend wird das Signal S2 über Widerstände 22, 23 dem positiven Eingang des zweiten Komparators 20 und dem invertierenden Eingang des Komparators 21 zugeführt.

Über die Ausgänge der Komparatoren 20, 21 werden Komparatorausgangssignale K2 bzw. K3 zu einem zweiten Eingang 17b bzw. zu einem dritten Eingang 17c der Logik-Stufe 17 geführt.

Zusätzlich ist der positive Eingang des zweiten Komparators 20 verbunden mit einem ersten Ausgang 24a eines Stromspiegels 24 und der positive Eingang des Komparators 21 ist verbunden mit einem zweiten Ausgang 24b des Stromspiegels 24. Der Stromspiegel 24 wird über seinen Eingang 24c in diesem Ausführungsbeispiel dadurch gesteuert, daß ein Eingangsstrom mittels eines variablen Widerstands 25, hier bestehend aus den Einzelwiderständen 25a und 25b, eingestellt wird.

Die Ausgänge der Logik-Stufe 17 führen zu der Motoransteuerstufe 11, die den Motor 10 ansteuert.

Die in Fig. 1 angegebenen Werte zur Bauelement-Charakterisierung, wie Widerstands- und Stromwerte wurden bei einer bevorzugten Ausführungsform des Ausführungsbeispiels verwendet, bzw. gemessen.

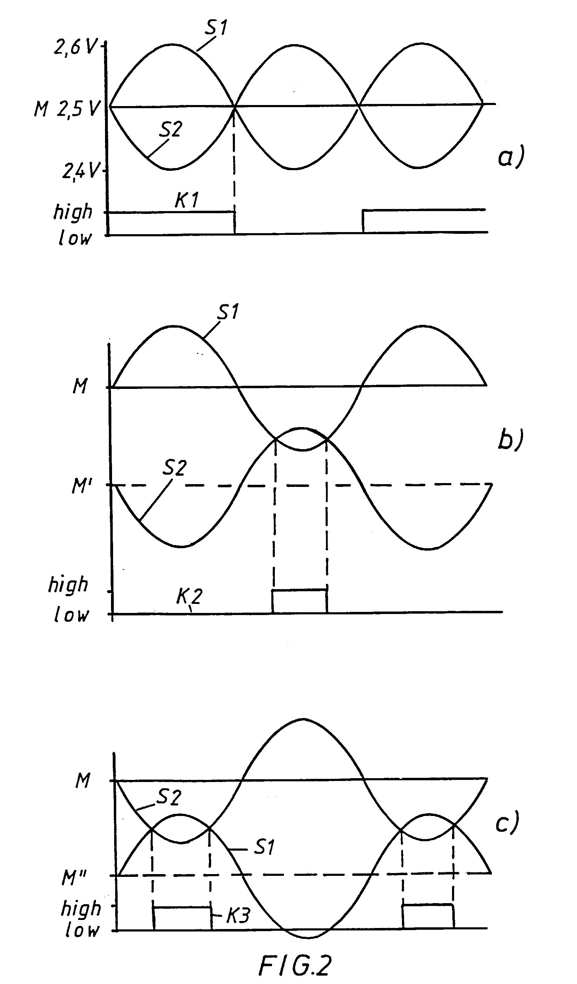

Die Funktion der Vorrichtung nach Fig. 1 wird im folgenden mit Hilfe der Fig. 2 beschrieben.

Fig. 2a zeigt die Verläufe der Sensorsignale S1 und S2 an den Eingängen des ersten Komparators 15. Man erkennt deutlich, daß die Amplituden dieser beiden Signale um 180 Grad phasenverschoben sind und um einen gemeinsamen Mittelwert M oszillieren, der bei der bevorzugten Ausführungsform der Fig. 1 bei ca. 2,5 Volt liegt. Das erste Komparatorausgangssignal K1 ist im unteren Teil der Fig. 2a dargestellt.

Durch den Komparator 15 werden die beiden Signale S1, S2 zunächst subtrahiert, d.h. es wird die Differenz

$$S1 - S2$$

gebildet und außerdem wird bei einem positiven Wert dieser Differenz ein K1 Signal erzeugt, das "high" ist. Bei einem negativen Wert der Differenz wird K1 "low".

Fig. 2b zeigt die Signalverläufe von S1, S2 an den Eingängen des zweiten Komparators 20. Das Signal S1 schwingt wiederum symmetrisch um den Mittelwert M. Durch den Strom der durch den Stromspiegel 24 eingeprägt wird , oszilliert das Signal S2 hingegen am positiven Eingang des Komparators 20 um einen zweiten Mittelwert M', welcher um einen ersten Differenzwert D1 gegenüber M verschoben ist. Das heißt

$$D1 = M - M'.$$

Durch die Verschiebung der beiden Signale um den Wert D1 gegeneinander, wird das Komparatorausgangssignal K2 erzeugt, wie ebenfalls in Fig. 2b dargestellt.

Durch die Verbindung des Stromspiegels 24 mit dem positiven Eingang des Komparators 21 wird hier eine Verschiebung des ersten Sensorsignales S1 bewirkt, was zu dem Komparatorausgangssignal K3 führt, wie in Fig. 2c dargestellt. Die Signale S1, S2 sind bei dem Komparator 21 um einen Wert D2, mit

$$D2 = M - M''$$

zueinander verschoben. Die Werte für D1 und D2 können gleich sein, wie in der bevorzugten Ausführung des beschriebenen Ausführungsbeispieles, oder aber verschieden, wenn an den Eingängen der Komparatoren Ströme verschiedener Werte eingeprägt werden.

Durch die Logik-Stufe 17 werden Ansteuersignale für die Motor-Ansteuerstufe 11 erzeugt. Diese erzeugt daraufhin Motor-Ansteuersignale Al, A2, A3 mit einem an sich bekannten Verlauf, wie er beispielsweise in der älteren Anmeldung P 41 07 373.8 ausführlich beschrieben wurde.

Zur Realisierung der eingangs genannten ersten Weiterbildung wurden die genannten Ausführungsbeispiele wie folgt ergänzt.

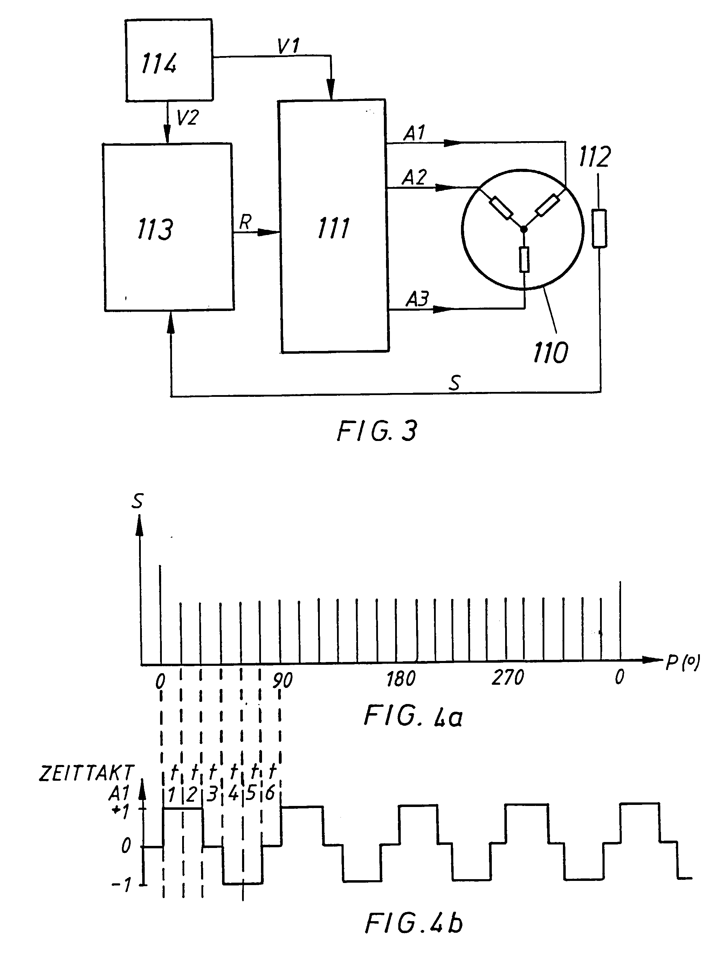

Fig. 3 zeigt einen mehrsträngigen Motor 110 dessen Stränge, von einer Motor-Ansteuerstufe 111 durch Ansteuersignale Al, A2, A3 betromt werden. Die Drehposition p und die Drehzahl n des Motors 110 werden durch einen Sensor 112 erfaßt, und das Sensorsignal S an eine Regelstufe 113 weitergeleitet. Bei Ausgestaltungen ist auch die Verwendung mehrerer Sensoren denkbar. In diesem Ausführungsbeispiel wird nicht erfindungsgemäß von einem optischen Sensor ausgegangen, der in Abhängigkeit von der Position p des Motors 110 nach jeweils 15 Grad ein kurzes Signal abgibt, wie in Fig. 4a dargestellt. Sensoren mit einer anderen Winkel-Auflösung sind ebenfalls denkbar. Anhand dieses Ausführungsbeispiels soll jedoch eine Weiterbildung hinsichtlich einer ungeregelten Versorgungsspannung dargestellt werden.

Die Motor-Ansteuerstufe 111 und die Regelstufe 113 werden durch eine Spannungsversorgungs-Stufe 114 jeweils mit einer Versorgungsspannung V1 bzw. V2 versorgt.

Die Regelstufe 113 erzeugt aufgrund des Sensorsignales S (siehe Fig. 4a) ein Drehzahlsignal, dessen Wert ein Maß ist für die Drehzahl des Motors 110 und vergleicht dieses Drehzahlsignal mit einem Sollwert. In Abhängigkeit von dem Soll/Ist-Vergleich wird ein Regelsignal R an die Motor-Ansteuerstufe 111 geleitet, die daraufhin die Amplitude der Ansteuersignale A bestimmt und den Motor 110 entsprechend bestromt. Das Regelsignal R kann in bekannter Weise ausgebildet sein, wie beispielsweise als PWM-Signal, als Gleichspannungssignal oder dergleichen.

Bei diesem Ausführungsbeispiel ist die Versorgungsspannung im wesentlichen ungeregelt, d.h. die Spannung kann im Belastungsfall um mehrere Volt schwanken.

Fig. 4b zeigt beispielhaft das Ansteuersignal Al in Abhängigkeit von der Position p des Motors 110.

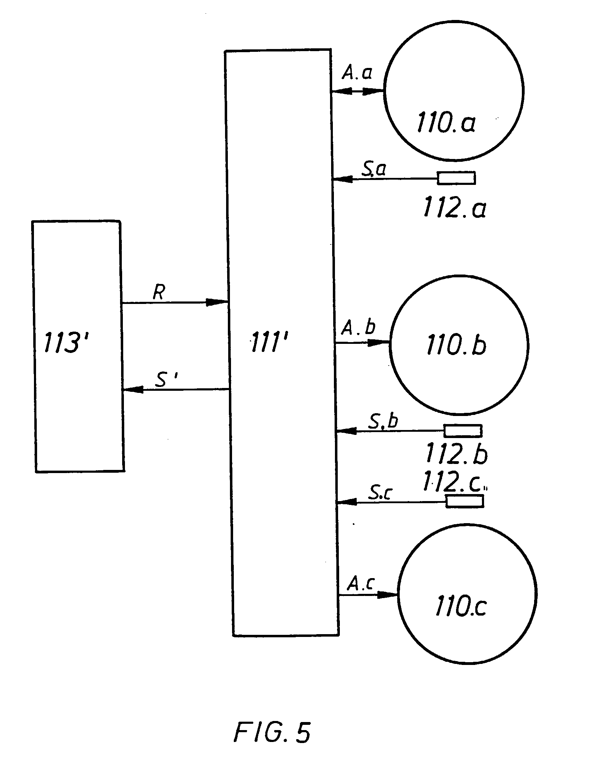

Fig. 5 zeigt ein weiteres Ausführungsbeispiel, das sich im wesentlichen von demjenigen der Fig. 3 dadurch unterscheidet, daß mehrere Motoren unterschiedlicher Art, wie beispielsweise für einen Videorecorder, angesteuert werden.

Ein erster Motor 110.a, der beispielsweise für das Laden einer Kassette mit Datenband vorgesehen ist und im folgenden als Lademotor bezeichnet wird, wird in diesem Ausführungsbeispiel durch einen Ladesensor 112.a überwacht. Ein Trommel-oder Drummotor 110.b, der einen Videokopf in Rotation verstzt, wird durch einen Trommelsensor 112.b und ein Antriebs(Capstan-) Motor 110.c, der den Transport des Bandes der Kassette bewirkt, wird durch einen Antriebssensor l12,c überwacht.

Als zu ladende Kassetten können beispielsweise solche angesehen werden, auf denen Audio- und/oder Videoinformationen gespeichert sind oder gepeichert werden sollen.

Die Sensorsignale S.a, S.b, S.c werden hier durch die Motor-Ansteuerstufe 111' aufbereitet, beispielsweise verstärkt, digitalisiert oder dergleichen, und als aufbereitetes Sensorsignal S' an die Regelstufe 113' geleitet, die derart ausgebildet ist, daß sie mehrere Sensorsignale verarbeiten kann und daraufhin Regelsignale R für die Motoren 110.a, 110.b, 110.c erzeugen kann. Es ist auch denkbar, daß die Sensorsignale S direkt der Regelstufe 113' zugeführt werden. Die Motoren 110 werden durch Ansteuersignale A.a, A.b, bzw. A.c angesteuert, die in Abhängigkeit von der Anzahl der Stränge der Motoren 110 mehrere Einzel-Ansteuersignale aufweisen.

Es kann die Verlustleistung und damit auch die Verlustwärme in der Motor-Ansteuerstufe 111' vermindert werden, wenn die Ansteuersignale als Choppersignale, wie Pulsweiten- (PWM-) Signale, Pulslängensignale oder dergleichen ausgebildet sind. Je nach Gestaltung von Endtransistoren der Stufe 111' ist beispielsweise ein Durchgangswiderstand in der Größenordnung von 0,1...2 Ohm möglich.

Der Durchgangswiderstand wird gewählt in Abhängigkeit von dem Strom zum Betrieb des Motors und der maximal zulässigen Verlustspannung bzw. Verlustleistung. Bei einer bevorzugten Ausführungsform entstand eine Verlustspannung von ca. 0,5 Volt, so daß der Wert der Versorgungsspannung V1 nur um diesen Betrag oberhalb der Ansteuerspannung der Motoren 110 zu liegen braucht.

Für ein gleichmäßiges Drehmoment sind die Chopperfrequenzen derart zu wählen, daß die Induktivitäten der Motor-Spulen integrierend wirken. Zusätzlich sollte beachtet werden, daß die Chopperfrequenzen oberhalb des hörbaren Bereiches liegen. Bei einer bevorzugten Ausführungsform für Videorekorder liegt diese Frequenz im Bereich von 20 kHz bis 30 kHz.

Die Choppersignale können dergestalt sein, daß das Ansteuersignal A, wie es in Fig. 4b angedeutet ist, in den entsprechenden Zeiträumen (t1, t2, t7,...) nicht konstant auf "high"-level (in Fig. 2b als "+1" dargestellt) verläuft, sondern während dieser Zeiträume mit einer gewünschten Chopper-Frequenz hochohmig ("0") oder gegen Masse ("-1) geschaltet wird.

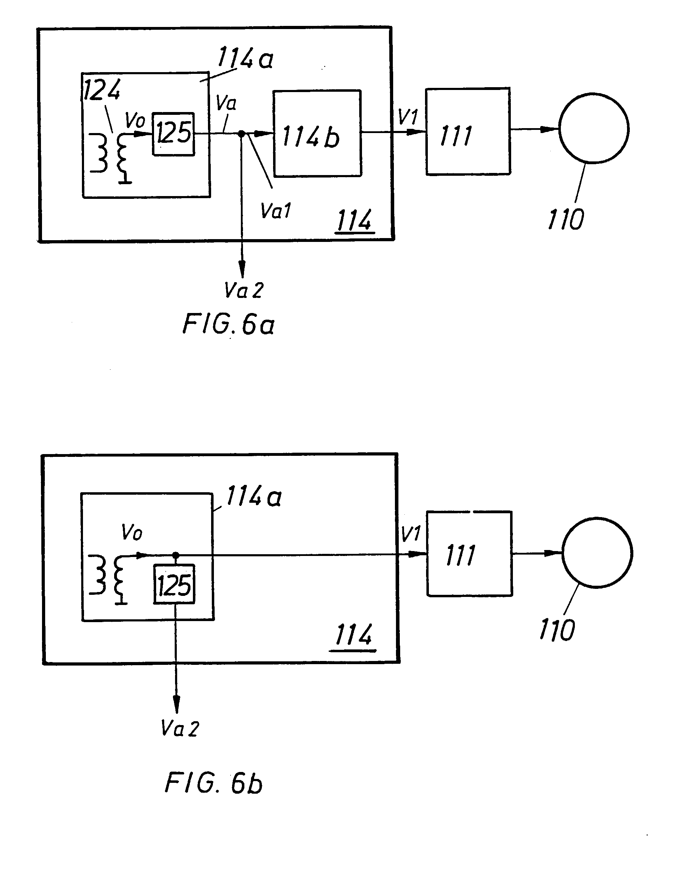

Fig. 6 dient zur Erläuterung der Vorteile der erfindungsgemäßen Lösung. Fig. 6a zeigt schematisch die Spannungsversorgung beispielhaft in einem Videorekorder gemäß dem Stand der Technik.

Ein Schaltnetzteil 114a, das Teil der Spannungsversorgungsstufe 114 ist, enthält einen Transformator 124 und eine erste Spannungsregelungsstufe 125 und erzeugt eine nahezu stabilisierte Spannung Va, die als Va1 einer zweiten Spannungsstabilisierungs-Stufe 114b zugeführt wird und als Va2 zur Versorgung von Verbrauchern mit nahezu konstanter Last, wie der Regelstufe 113, einem Videoteil, dem Tuner und weiterer Stufen eines Viderekorders dient. Die von der Stufe 114b geregelte Spannung ist die Versorgungsspannung V1, die der Motoransteuerstufe 111 zugeführt wird.

Es sei angenommen, daß der mit dem Signal A angesteuerte Motor 110, dessen Last nicht konstant ist, sondern beispielsweise abhängt davon, ob Anlaufphase oder Normalbetrieb vorliegt, eine Spannung von 12 Volt benötigt und daß an jeder der Stufen 125, 114b, 111 beispielsweise 2 Volt abfallen. Dann muß

$$A = 12 \text{ Volt}, V1 = 14 \text{ Volt}, Va = 16 \text{ Volt und } Vo = 18 \text{ Volt}$$

betragen. Somit beträgt die Spannungsdifferenz zwischen der Transformatorspannung Vo und dem Ansteuersignal A 6 Volt. Soll ein Motor angesteuert werden, der einen Strom I von 1 Ampere benötigt, so fallen insgesamt an Halbleiterbauelementen 6 Watt Verlustleistung ab. Diese führt nicht nur zu einer übermäßigen Erwärmung, sondern auch zu einer verkürzten Lebensdauer der Regelstufen 125, 114b und 111.

Demgegenüber zeigt Fig. 6b schematisch die Spannungsversorgung gemäß des vorliegenden Ausführungsbeipiels. Die Transformatorspannung Vo wird direkt als Versorgungsspannung V1 der Motor-Ansteuerstufe 111 zugeführt. Lediglich die Spannung Va2 zur Versorgung der Verbraucher mit konstanter Last wird im Schaltnetzteil 114a durch die Stufe 125 stabilisiert.

Wenn der Motor 110 wie bei dem obem genannten Beispiel 12 Volt benötigt und an der Stufe 111 eine Spannung von 2 Volt abfällt, so sind

$$A = 12 \text{ Volt und } V1 = 14 \text{ Volt.}$$

Es fallen insgesamt nur 2 Volt bzw. 2 Watt (I = 1 Ampere) an Halbleiterstufen ab. Damit wird die Verlustwärme reduziert und die Lebensdauer der Bauelemente verlängert.

Als zusätzlicher Vorteil tritt noch auf, daß bei einer geringeren Transformatorspannung Vo

- der benötigte Transformator bei gleicher Trafowickel-Größe einen geringeren Ausgangswiderstand aufweist, wodurch der an dem Trafo abfallende Leistungsabfall reduziert werden kann, und/oder daß
- der Trafo in seiner Größe reduziert werden kann.

Ist die Stufe derart ausgelegt, daß sie Chopper-Ansteuersignale an den Motor 110 abgibt, so kann die Verlustleistung an der Stufe 111 weiter reduziert werden. Wie bereits oben erwähnt, können die Endstufen derart gestaltet werden, daß der Wert des Durchgangswiderstands im Bereich von unter 1 Ohm liegt. Damit liegt auch die abfallende Spannung (I = 1 Ampere) unter 1 Volt und die Verlustleistung unter 1 Watt.

Bei der Ansteuerung mehrerer Motoren ist der Strom I höher und die Differenz bei der Verlustleistung ist höher zwischen Chopper-Ansteuerung und amplitudengeregelter Ansteuerung.

Die eingangs genannte zweite Weiterbildung kann durch folgende Variationen der genannten Ausführungsbeispiele erzielt werden. Die Bildung der phasenverschobenen Signale K1-K3 (Figur 2) erfolgt hier nicht erfindungsgemäß durch Potential- und Phasenverschiebung der Sensorsignale S1 und S2. Das Ausfürungsbeispiel soll aber eine verbesserte Ansteuerung des Elektromotors erklären, wenn dieser mit verschiedenen Drehrichtungen betrieben wird.

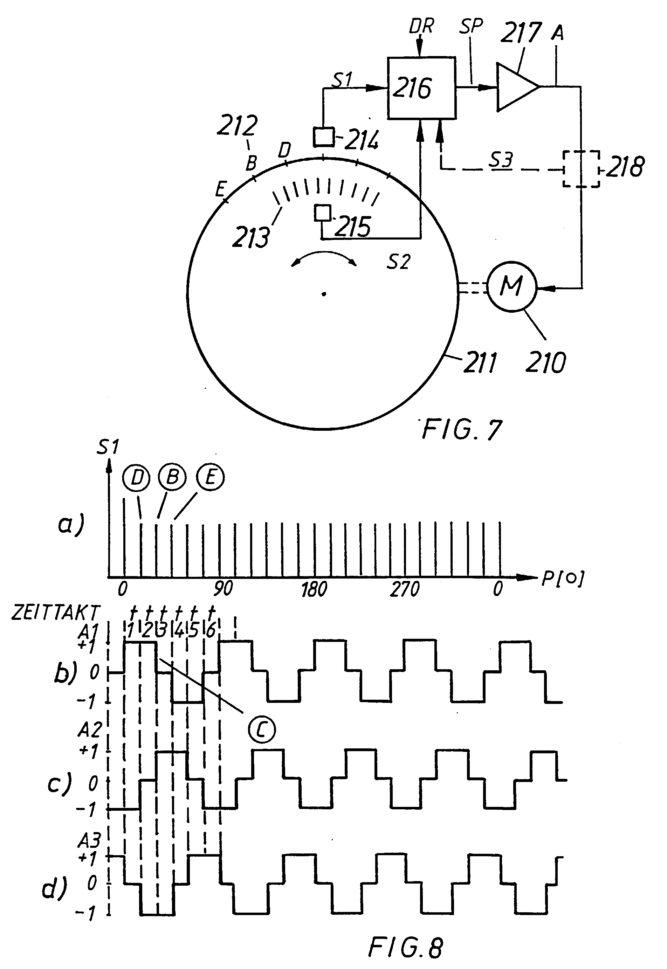

Figur 7 zeigt einen Motor 210, der mechanisch verbunden ist mit einem Drehrad 211. Dieses weist eine erste Gruppe von Marken 212 und eine zweite Grupoe von Marken 213 auf. Aufgrund der ersten Gruppe von Marken 212 wird durch einen ersten Sensor 214 ein erstes Sensorsignal S1 erzeugt und aufgrund der zweiten Gruppe von Marken 213 wird durch einen zweiten Sensor 215 ein Sensorsignal S2 erzeugt.

Die Sensorsignale S1, S2 werden an ein Steuergerät 216 geleitet, dem als weitere Eingabegröße ein Wert für die gewünschte Drehrichtung DR eingegeben werden kann. Das Ausgangssignal SP des Steuergerätes 216 führt zu einem Verstärker 217, der den Motor 210 mittels des Ansteuersignals A bestromt.

Die Form des Ansteuersignals A ist abhängig von der Gestaltung des Motors 210. Für einen dreisträngigen Motor sind geeignete Sensorsignale S1 und geeignete Ansteuersignale A in Figur 8 dargestellt.

Wie in Figur 8 angegeben, erzeugt der erste Sensor 214 ein Sensorsignal S1, das periodisch nach jeweils 15° einen Spannungsimpuls liefert. Durch diese Spannungsimpulse sind Zeittakte t1, t2 ... definiert. In Fig. 8a sind drei Spannungsimpulse herausgehoben und mit B, D, E bezeichnet. Diese Impulse werden durch diejenigen Marken 212 erzeugt, die in Fig. 7 entsprechend bezeichnet wurden. Darauf wird in der weiteren Beschreibung noch eingegangen.

Das Motor-Ansteuersignal A besteht aus drei Ansteuersignalen A1, A2, A3 für die einzelnen Motorstränge. Die Signale A1, A2, A3 haben in diesem Ausführungsbeispiel den in den Figuren 8b, c, d dargestellten Verlauf. So wird ein erster MotorStrang mittels des Ansteuersignales A1

i) während der ersten beiden Zeittakte t1, t2 positiv bestromt,

ii) während des Zeittaktes t3 hochohmig geschaltet,
iii) während der Zeittakte t4 und t5 negativ bestromt und
iv) während des Zeittaktes t6 hochohmig geschaltet.

Die Bestromung der beiden anderen Motorstränge erfolgt wie in Figur 8c und d dargestellt. Auf diese an sich bekannte Ansteuerung soll hier nur insoweit eingegangen werden, wie es für das Verständnis der vorliegenden Erfindung notwendig ist.

Damit beispielsweise das Ansteuersignal A1 für den ersten Motorstrang den gewünschten Verlauf aufweist, ist es zum Ausgleich von internen Verzögerungen erforderlich, daß das Steuergerät 216 vor dem Auftreten eines Spannungsimpulses des Sensorsignales S1 einen Steuerimpuls erzeugt, der zur Umschaltung des Motor-Ansteuersignals von einem ersten in einen anderen der Zustände führt.

Beispielhaft für einen derartigen von dem Steuergerät 216 erzeugten Steuerimpuls sei beispielsweise das Signal SP angesehen, das an den Verstärker 217 weitergeleitet wird. Damit sind in diesem Ausführungsbeispiel diejenigen Verzögerungen zu kompensieren, die durch den Verstärker 217 und durch Signallaufzeiten hinter dem Verstärker 217 auftreten.

Es sei jedoch darauf hingewiesen, daß in Abhängigkeit von der Gestaltung des Steuergerätes 216 auch dort entsprechende Verzögerungen auftreten können, die wie im folgenden beschrieben, kompensiert werden können.

In diesem Ausführungsbeispiel dient nicht derjenige Spannungsimpuls von Signal S1 zur Umschaltung des Motor-Ansteuersignales A, der in Fig. 8 jeweils am Anfang eines entsprechenden Zeittaktes auftritt (Impuls B für Flanke C), sondern derjenige Spannungsimpuls, der zuvor auftritt, also beispielsweise bei einer Drehung im Uhrzeigersinn der Impuls D für Flanke C. Dadurch wird unter Umständen erforderlich, daß eine Verzögerung zwischen dem Impuls D und dem Umschalten des Signals SP bewirkt wird.

Der Wert dieser Verzögerung ist bei einer ersten Ausführung als Sollwert fest vorgebbar, und wird ermittelt beispielsweise während eines Fertigungsprozesses oder bei einem Reparaturfall. Dieser Sollwert wird verglichen mit dem Sensorsignal S2 und daraufhin wird das Steuersignal SP derart umgeschaltet, daß beispielsweise die Flanke C des Ansteuersignals A1 genau zu Beginn des Zeittaktes t3 auftritt.

Dreht der Motor 210 das Drehrad 211 entgegen dem Uhrzeigersinn, was dem Steuergerät 216 durch das Signal DR von außen vorgebbar ist, so tritt der Impuls E vor dem Impuls B auf (siehe auch Fig. 7). Hierbei kann für eine optimale Kommutierung eine andere Verzögerung erforderlich werden als bei der Drehrichtung im Uhrzeigersinn. Daher ist auch ein zweiter Sollwert auszuwerten.

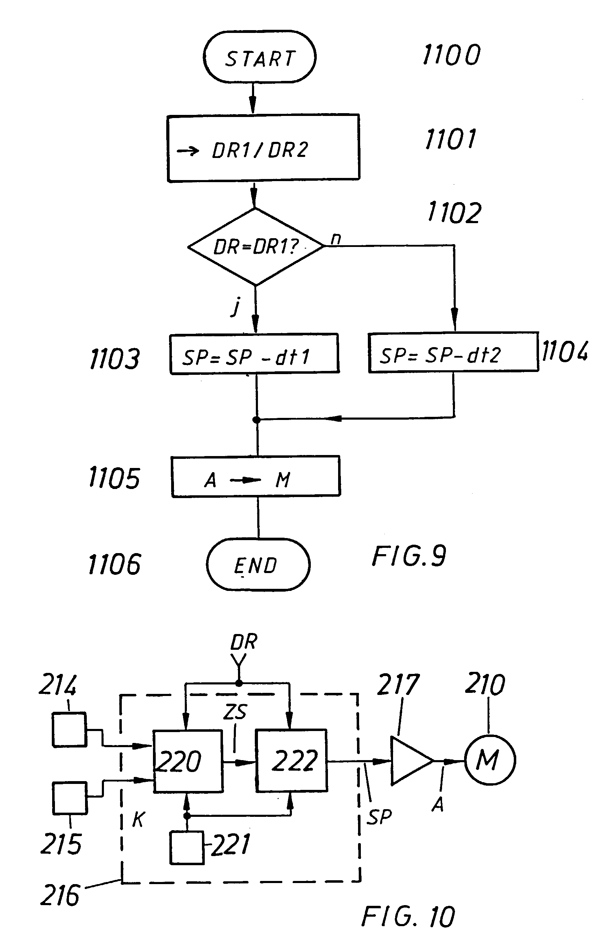

Das entsprechende Verfahren ist in Figur 9 dargestellt. Nach dem Start in Schritt 1100 wird eine der gewünschten Drehrichtungen DR1, beispielsweise im Uhrzeigersinn, oder DR2, beispielsweise entgegen dem Uhrzeigersinn, im Schritt 1101 eingegeben. In Schritt 1102 erfolgt eine Abfrage, welche der beiden Drehrichtungen vorliegen. Handelt es sich um die Drehrichtung DR1, so läuft das Verfahren bei Schritt 1103 fort, wo bewirkt wird, daß das Steuersignal SP zeitlich um einen Zeitraum dt1 vorverlegt wird.

Wird in Schritt 1102 jedoch festgestellt, daß es sich um die Drehrichtung DR2 handelt, so wird das Steuersignal SP im Schritt 1104 um einen zeitlichen Wert dt2 vorverlegt.

Hierzu sei angemerkt, daß die zeitliche Versetzung des Steuersignals SP erfolgen kann, wie es im Zusammenhang mit der Beschreibung der Figuren 7, 8 erwähnt wurde. Denkbar ist jedoch beispielsweise auch, daß das Signal S1 abgespeichert wird und die Steuersignale SP grundsätzlich um einen bestimmten Wert T zeitlich verzögert ausgegeben werden. Die Korrektur von systembedingten Verzögerungen, und bei Bedarf auch in Abhängigkeit von der Drehrichtung, würde in diesem Fall durch eine zeitliche Versetzung bezüglich der Verzögerung T erfolgen. Diese Variante ist auch denkbar, wenn nur eine Drehrichtung für den Motor 210 vorgesehen ist.

Sowohl nach Schritt 1103 als auch nach Schritt 1104 fährt das Verfahren mit Schritt 1105 fort, wo der Motor 210 durch das zeitlich korrigierte Ansteuersignal A bestromt wird. Nach Ende des Betriebs des Motors 210 endet das Verfahren mit Schritt 1106.

Bei einer Ausgestaltung des Ausführungsbeispiels nach Fig. 7 ist vorgesehen, den Strom mit dem der Motor 210 bestromt wird, durch einen Stromsensor 218 zu erfassen, der in Fig. 7 gestrichelt eingezeichnet ist, und dem Steuergerät 216 ein entsprechendes Signal S3 zuzuführen.

Das Sensorsignal S3 wird von dem Steuergerät 216 derart ausgewertet, daß der Wert des Stromes, dem der Motor 210 zugeführt wird, du'rch Variation der Zeiten dt1, dt2 auf ein Minimum eingeregelt wird bei gleicher Belastung des Motors 210. Dadurch wird also der Wirkungsgrad auf ein Maximum geregelt, was einer optimalen Kommutierung entspricht.

Fig. 10 zeigt ein weiteres Ausführungsbeispiel. Der wesentliche Unterschied gegenüber dem Ausführungsbeispiel der Fig. 7 liegt darin, daß die Korrektur des Kommutierungssignals hier in Abhängigkeit von dem Drehwinkel erfolgt, und nicht in Abhängigkeit von der Zeit, wie bei dem vorigen Ausführungsbeispiel. Das stellt insbesondere bei einer nicht-konstanten Drehgeschwindigkeit des Motors 210 einen wesentlichen Unterschied dar. Durch dieses Ausführungsbeispiel werden insbesondere Fehler, die durch einen Versatz des Sensors 214 entstehen, korrigiert.

Mittel und Signale, die die gleiche Bedeutung haben, sind in Fig. 10 mit den gleichen Referenzzeichen bezeichnet wie in Fig. 7 und auf sie wird nur insoweit eingegangen, wie es für das Verständnis notwendig ist.

In Fig. 10 weist das Steuergerät 216 einen Zähler 220 auf, dem die Sensorsignale S1, S2 und ein Korrektursignal K aus einem Speicher 221 zugeführt werden. Das Ausgangssignal ZS des Zählers 220 und auch das Korrektursignal K werden zu einem Dekoder 222 geleitet, der das Steuersignal SP erzeugt.

Der Zähler 220 ist derart ausgebildet, daß er von 0 bis m zählt. Dabei ist m die Anzahl von Impulsen durch die Marken 213 während eines vollständigen Arbeitszyklus (t1 - t6; siehe Fig. 8). Bei Erreichen des Wertes m fängt der Zähler 220 erneut von Null an zu zählen und es wird ein Zählersignal ZS erzeugt, wodurch der Dekoder 222 ein Steuersignal SP generiert und ein entsprechendes Motor-Ansteuersignal A an den Motor 210 abgegeben wird.

Der in dem Speicher 221 abgespeicherte Korrekturwert wird ermittelt beispielsweise während eines Fertigungsprozesses oder einer Wartung oder aber automatisch bestimmt durch Optimierung von Betriebsgrößen, wie beispielsweise Minimierung des Ansteuerstromes.

Wird eine der Marken 212, beispielsweise B, durch den Sensor 214 detektiert, so fängt der Zähler 220 ausgehend von einem Korrekturwert K an zu zählen. Für die folgende Erläuterung wird davon ausgegangen, daß sich das Rad 211 im Uhrzeigersinn dreht.

Ist K gleich Null, so werden alle m Impulse detektiert und gezählt und gleichzeitig mit der Detektion einer weiteren Marke 212 (E) wird der Zählerwert Null erreicht und das Zählersignal ZS erzeugt.

Ist K größer als Null, so zählt der Zähler 220 nur m-K Impulse bis der Wert Null erreicht wird und das Signal ZS erzeugt wird. Damit liegt der entsprechende Zeitpunkt zur Erzeugung eines Steuersignales für die Marke E vor deren Detektion.

Ist K kleiner als Null, so entspricht der Zeitpunkt, zu dem der Wert Null gezählt wird, dem Zeitpunkt, zu dem die Ansteuerung für die Marke B erfolgt.

Das heißt, der Dekoder 222 muß berücksichtigen, ob K größer oder kleiner als Null ist und entsprechend das Ansteuersignal für eine folgende (E) der Marken 212 oder für eine vorangegangene (B) der Marken 212 erzeugen.

Bei der entgegengesetzten Drehrichtung, in diesem Ausführungsbeispiel entgegen dem Uhrzeigersinn, fängt der Zähler 220 nicht mit dem Wert K an zu zählen, sondern mit dessen negativem Wert -K. Sowohl der Zähler 220 als auch der Detektor 222 muß also die Drehrichtung DR bei der entsprechenden Signalerzeugung berücksichtigen.

Die Art der Korrektur dieses Ausführungsbeispiels kann auch mit derjenigen des Ausführungsbeispiels der Fig. 7 bzw. Fig 9 kombiniert werden.

Weitere Versionen der genannten Ausführungsbeispiele können zumindest einzelne der folgenden Variationen aufweisen:

- bei Verwendung von pulsmodulierten Verfahren kann die entsprechende Chopper-Frequenz synchronisiert werden in Abhängigkeit von einer verwendeten Motortaktfrequenz. Die Chopper-Frequenz kann in der Größenordnung der Motortaktfrequenz liegen (siehe P 4215827);
- es kann eine Umschaltung vorgesehen sein abhängig davon, ob ein in der Logik-Stufe 17 verwendeter Mikroprozessor pulsmodulierte Signale abgibt oder nicht (siehe P 4219775);

Somit wird durch die vorliegende Erfindung eine Motoransteuerung vorgestellt, die bevorzugterweise nur einen Hallsensor benötigt. Die Erfindung kann beispielsweise in einem Videorekorder verwendet werden.

Durch eine erste Weiterbildung wird die Erfindung derart verändert, daß eine benötigte Versorgungsspannung unstabilisiert sein kann. Diese erste Weiterbildung umfaßt folgende überlegungen.

Ein Elektromotor kann durch Signale angesteuert werden, die als getaktete Signale ausgebildet sind, wie beispielsweise pulsweitenmodulierte oder pulslängenmodulierte Signale.

Die Ansteuerung mit einer im wesentlichen ungeregelten Spannung hat insbesondere bei der Verwendung mehrerer Motoren besondere Vorteile. Diese Motoren können beispielsweise sein

- ein erster Motor zum Laden einer Kassette mit Datenband,
- ein zweiter Motor zur Rotation eines Aufzeichnungsund/oder Wiedergabekopfes, sowie
- ein dritter Motor zum Transport des Datenbandes der Kassette.

Eine zweite Weiterbildung erlaubt eine verbesserte Ansteuerung des ein- oder mehrsträngigen Elektromotors, wenn dieser mit verschiedenen Drehrichtungen betrieben werden soll. Das wird dadurch erreicht, daß der jeweilige Zeitpunkt der Erzeugung der Steuersignale (SP) korrigiert wird aufgrund von einer oder mehreren Korrekturgrößen, die ein Maß darstellen für zeitliche und/oder drehwinkelabhängige Verschiebungen der Sensorsignale.

Dabei kann ein erstes Sensorsignal (S1) mit einer groben Auflösung bezüglich der Drehposition und ein zweites Sensorsignal (S2) mit einer feinen Auflösung bezüglich der Drehposition vorhanden sein, wobei das erste Sensorsignal (S1) verwendet wird zur Bestimmung, welcher Motorstrang auf welche Weise bestromt wird, und das zweite Sensorsignal (S2) zur zeitlichen und/oder drehwinkelabhängigen Korrektur dient.

Weiterhin kann der Wert der Korrekturgröße abhängig sein von der Drehrichtung des Motors, und es kann der Wert der Korrekturgröße fest vorgebbar sein und/oder bestimmt werden aufgrund der Regelung einer Betriebsgröße. Diese kann beispielsweise der Wert des Stromes sein, mit dem der Motor bestromt wird und derart eingestellt werden, daß es dem Maximalwert des Wirkungsgrades entspricht.

Eine zur Durchführung der zweiten Weiterbildung geeignete Vorrichtung weist Steuermittel auf, die den jeweiligen Zeitpunkt der Erzeugung der Steuersignale (SP) korrigieren in Abhängigkeit von einer oder mehreren Korrekturgrößen (K), die ein Maß darstellen für zeitliche und/oder drehwinkelabhängige Verschiebungen der Sensorsignale. Zusätzlich kann ein erster Sensor vorgesehen sein, der ein erstes Sensorsignal (S1) mit einer groben Auflösung bezüglich der Drehposition erzeugt, und ein zweiter Sensor, der ein zweites Sensorsignal (S2) erzeugt mit einer feinen Auflösung bezüglich der Drehposition. Das Steuermittel bestimmt aufgrund des ersten Sensorsignals (S1), welcher Motorstrang auf welche Weise bestromt wird, und aufgrund des zweiten Sensorsignals (S2) werden zeitliche und/oder drehwinkelabhängige Korrekturen durchführt.

Die genannte Korrekturgröße kann abhängig sein von der Drehrichtung des Motors.


## Patentansprüche

1. Verfahren zur Regelung der Drehzahl und/oder Position eines Elektromotors (10) mittels eines Hallsensors (12), der an seinen Anschlüssen zwei um einen gemeinsamen Mittelwert (M) gegenphasig oszillierende Sensorsignale (S1, S2) abgibt, von denen phasenverschobene Ansteuersignale (A1, A2, A3) für die Kommutierung eines mehrsträngigen Elektromotors (10) abgeleitet werden,
**dadurch gekennzeichnet,**

daß in einem ersten Vergleich zwischen den beiden Sensorsignalen (S1, S2) ein erstes Signal (K1) erhalten wird,
daß in einem zweiten Vergleich zwischen einem der beiden Sensorsignale (S1 bzw. S2) und dem um einen bestimmten Gleichspannungswert (D1, D2) potentialverschobenen anderen der beiden Sensorsignale (S2 bzw. S1) ein zweites Signal (K2, K3) erhalten wird, das um einen bestimmten Betrag gegenüber dem ersten Signal (K1) phasenverschoben ist, und
daß der Vergleich so durchgeführt wird, daß das erste bzw. zweite Signal während eines positiven Wertes der aus dem Vergleich resultierenden Differenz einen ersten logischen Signalwert aufweist und während eines negativen Wertes der Differenz einen zweiten logischen Signalwert aufweist.

2. Verfahren nach Anspruch 1, dadurch gekennzeichnet, daß Ansteuersignale (A), mit denen der Motor angesteuert wird, bestimmt werden durch Ansteuermittel, die mit einer im wesentlichen ungeregelten Spannung (V1) versorgt werden.

3. Verfahren nach Anspruch 1 oder 2, dadurch gekennzeichnet, daß der Elektromotor durch Signale angesteuert wird, die als getaktete Signale ausgebildet sind, wie beispielsweise pulsweitenmodulierte oder pulslängenmodulierte Signale.

4. Verfahren nach einem der Ansprüche 1 bis 3, dadurch gekennzeichnet, daß der jeweilige Zeitpunkt der Erzeugung der Steuersignale (SP) korrigiert wird aufgrund von einer oder mehreren Korrekturgrößen, die ein Maß darstellen für zeitliche und/oder drehwinkelabhängige Verschiebungen der Sensorsignale.

5. Verfahren nach Anspruch 4, dadurch gekennzeichnet, daß ein erstes Sensorsignal (S1) mit einer groben Auflösung bezüglich der Drehposition und ein zweites Sensorsignal (S2) mit einer feinen Auflösung bezüglich der Drehposition vorhanden sind, wobei das erste Sensorsignal (S1) verwendet wird zur Bestimmung, welcher Motorstrang auf welche Weise bestromt wird, und das zweite Sensorsignal (S2) zur zeitlichen und/oder drehwinkelabhängigen Korrektur dient.

6. Verfahren nach Anspruch 4 oder 5, dadurch gekennzeichnet, daß der Wert der Korrekturgröße abhängig ist von der Drehrichtung des Motors.

7. Verfahren nach einem der Ansprüche 1 bis 6, dadurch gekennzeichnet, daß der Wert der Korrekturgröße fest vorgebbar ist und/oder bestimmt wird aufgrund der Regelung einer Betriebsgröße.

8. Verfahren nach Anspruch 7, dadurch gekennzeichnet, daß die Betriebsgröße der Wert des Stromes ist, mit dem der Motor bestromt wird und daß dieser derart eingestellt wird, daß es dem Maximalwert des Wirkungsgrades entspricht.

9. Vorrichtung zur Regelung der Drehzahl und/oder Position eines Elektromotors (10) mittels eines Hallsensors (12), der an seinen Anschlüssen zwei um einen gemeinsamen Mittelwert (M) gegenphasig oszillierende Sensorsignale (S1, S2) abgibt, von denen phasenverschobene Ansteuersignale (Al, A2, A3) für die Kommutierung eines mehrsträngigen Elektromotors (10) abgeleitet werden,
**dadurch gekennzeichnet,**

daß ein erster Vergleicher (15) zur Bildung eines ersten Signals (K1) aus den beiden Sensorsignalen (S1, S2) vorgesehen ist,
daß ein zweiter Vergleicher (20, 21) zur Bildung eines zweiten Signals (K2, K3) vorgesehen ist durch einen Vergleich zwischen einem der beiden Sensorsignale (S1 bzw. S2) und dem um einen bestimmten Gleichspannungswert (D1, D2) potentialverschobenen anderen der beiden Sensorsignale (S2 bzw. S1), wobei das zweite Signal (K2, K3) um einen bestimmten Betrag gegenüber dem ersten Signal (K1) phasenverschoben ist, und daß die Vergleicher (15, 20, 21) so wirken, daß das erste bzw. zweite Signal während eines positiven Wertes der aus dem Vergleich resultierenden Differenz einen ersten logischen Signalwert aufweist und während eines negativen Wertes der Differenz einen zweiten logischen Signalwert aufweist.

10. Vorrichtung nach Anspruch 9, dadurch gekennzeichnet, daß eine Versorgungsspannung (V1) zur Versorgung der Vorrichtung im wesentlichen ungeregelt ist.

11. Vorrichtung nach Anspruch 10, dadurch gekannzeichnet, daß mehrere Motoren (110) angesteuert werden, von denen

- ein erster Motor (110. a) zum Laden einer Kassette mit Datenband,
- ein zweiter Motor (110.b) zur Rotation eines Aufzeichnungs- und /oder Wiedergabekopfes und
- ein dritter Motor (110.c) zum Transport des Datenbandes der Kassette dienen.

12. Vorrichtung nach einem der Ansprüche 9 bis 11, dadurch gekennzeichnet, daß die Vorrichtung folgende Mittel aufweist:

- einen oder mehrere Sensoren (214, 215), die die Drehzahl und/oder Drehposition des Motors erfassen, und
- ein Steuermittel (216), das aufgrund der Sensorsignale der Sensoren (214, 215) den jeweilige Zeitpunkt bestimmt, zu dem Steuersignale (SP) erzeugt werden, die zur Bildung von Motor-Ansteuersignalen (A) dienen,

und daß die Steuermittel (216) den jeweiligen Zeitpunkt der Erzeugung der Steuersignale (SP) korrigieren in Abhängigkeit von einer oder mehreren Korrekturgrößen (K), die ein Maß darstellen für zeitliche und/oder drehwinkelabhängige Verschiebungen der Sensorsignale.

13. Vorrichtung nach Anspruch 12, dadurch gekennzeichnet, daß ein erster Sensor (214) ein erstes Sensorsignal (S1) mit einer groben Auflösung bezüglich der Drehposition erzeugt, daß ein zweiter Sensor (215) ein zweites Sensorsignal (S2) mit einer feinen Auflösung bezüglich der Drehposition erzeugt, und daß das Steuermittel (216) aufgrund des ersten Sensorsignals (S1) bestimmt, welcher Motorstrang auf welche Weise bestromt wird, und aufgrund des zweiten Sensorsignals (S2) zeitliche und/oder drehwinkelabhängige Korrekturen durchführt.

14. Vorrichtung nach Anspruch 12 oder 13, dadurch gekennzeichnet, daß der Wert der Korrekturgröße abhängig ist von der Drehrichtung des Motors.

15. Vorrichtung nach einem der Ansprüche 12 bis 14, dadurch gekennzeichnet, daß ein Speichermittel (221) vorgesehen ist, in dem ein zuvor bestimmter Wert der Korrekturgröße abspeicherbar ist.

16. Vorrichtung nach einem der Ansprüche 12 bis 15, dadurch gekennzeichnet, daß ein Betriebsgrößensensor (218) vorgesehen ist, der eine Betriebsgröße des Motors (210) erfaßt und daß Mittel vorgesehen sind, die die Betriebsgröße regeln und dadurch den Wert der Korrekturgröße bestimmen.

## Claims

1. A method for regulating the rotational speed and/or position of an electric motor (10) by means of a Hall sensor, supplying at its terminals two sensor signals (S1, S2) which oscillate in anti-phase about a common mean value (M) and from which there are derived phase-shifted control signals (A1, A2, A3) for the commutation of a multi-phase-winding electric motor (10), characterized in that

   a first signal (K1) is obtained in a first comparison between the two sensor signals (S1, S2),
   that, in a second comparison between one of the two sensor signals (S1 or S2) and the other of the two sensor signals (S2 or S1) displaced in potential by a certain d.c. voltage value (D1, D2), there is obtained a second signal (K2, K3), which is phase-shifted by a certain amount with respect to the first signal (K1) and
   that the comparison is carried out so that the first or second signal has a first logical signal value during a positive value of the difference resulting from the comparison and a second signal value during a negative value of the difference.

2. A method according to claim 1, characterized in that control signals (A), by means of which the motor is controlled, are determined by control means, which are supplied with an essentially unregulated voltage (V1).

3. A method according to claim 1 or 2, characterized in that the electric motor is controlled by signals which are formed as clock signals such as, for example, pulse-width modulated or pulse-length modulated signals.

4. A method according to any one of claims 1 to 3, characterized in that the respective time of the generation of the control signals (SP) is corrected on the basis of one or more correction variables, which represent a measure for temporal and/or rotational angle dependent displacements of the sensor signals.

5. A method according to claim 4, characterized in that there are provided a first sensor signal (S1) with a coarse resolution with respect to the rotational position and a second sensor signal (S2) with a fine resolution with respect to the rotational position, the first sensor signal (S1) being used for the determination as to which motor winding is fed with current in which way and the second sensor signal (S2) serving for the temporal and/or rotational angle dependent correction.

6. A method according to claim 4 or 5, characterized in that the value of the correction variable depends on the direction of rotation of the motor.

7. A method according to any one of claims 1 to 6, characterized in that the value of the correction variable is predeterminable to a fixed amount and/or is determined based on the regulation of an operating variable.

8. A method according to claim 7, characterized in that the operating variable is the value of the current fed to the motor, and that this is adjusted in such a way that it corresponds to the maximum value of the efficiency.

9. A device for regulating the rotational speed and/or position of an electric motor (10) by means of a Hall sensor (12), supplying at its terminals two sensor signals (S1, S2) which oscillate in anti-phase about a common mean value (M) and from which there are derived phase-shifted control signals (A1, A2, A3) for the commutation of a multi-phase-winding electric motor (10), characterized in that

   a first comparator (15) is provided for the formation of a first signal (K1) out of the two sensor signals (S1, S2), that a second comparator (20, 21) is provided for the formation of a second signal (K2, K3) by means of a comparison between one of the two sensor signals (S1 or S2) and the other of the two sensor signals (S2 or S1) displaced in potential by a certain d.c. voltage value (D1, D2), the second signal (K2, K3) being phase-shifted by a certain amount with respect to the first signal (K1) and
   that the comparators (15, 20, 21) function so that the first or second signal has a first logical signal value during a positive value of the difference resulting from the comparison and a second signal value during a negative value of the difference.

10. A device according to claim 9, characterized in that a supply voltage (V1) for supplying the device is essentially unregulated.

11. A device according to claim 10, characterized in that several motors (110) are controlled of which

- a first motor (110.a) serves for loading a cassette with data tape,
- a second motor (110.b) serves for rotating a recording and/or playback head, and
- a third motor (110.c) serves for transporting the data tape of the cassette.

**12.** A device according to any one of claims 9 to 11, characterized in that the device comprises the following means:

- one or more sensors (214, 215) which detect the rotational speed and/or rotational position of the motor, and
- a control means (216) which determines, on the basis of the sensor signals from the sensors (214, 215), the respective time at which control signals (SP) are generated which serve for the formation of motor control signals (A),

and that the control means (216) corrects the respective time of the generation of the control signals (SP) depending upon one or more correction variables (K), which represent a measure for temporal and/or rotational angle dependent displacements of the sensor signals.

**13.** A device according to claim 12, characterized in that a first sensor (214) generates a first sensor signal (S1) with a coarse resolution with respect to the rotational position, that a second sensor (215) generates a second sensor signal (S2) with a fine resolution with respect to the rotational position, and that the control means (216) determines, based upon said first sensor signal (S1), which motor winding is fed with current in which way and carries out temporal and/or rotational angle dependent corrections based upon said second sensor signal (S2).

**14.** A device according to claim 12 or 13, characterized in that the value of the correction variable depends on the rotational direction of the motor.

**15.** A device according to any one of claims 12 to 14, characterized in that a memory means (221) is provided, in which a prior determined value for the correction variable can be stored.

**16.** A device according to any one of claims 12 to 15, characterized in that an operating variable sensor (218) is provided, which detects an operating variable of the motor (210), and that means are provided which regulate said operating variable and thereby determine the value of the correction variable.

**Revendications**

**1.** Procédé pour réguler la vitesse de rotation et/ou la position d'un moteur électrique (10) au moyen d'un capteur à effet Hall (12), lequel délivre à ses bornes deux signaux de capteur (S1, S2) oscillant en opposition de phase autour d'une valeur moyenne (M) commune, desquels sont dérivés des signaux d'excitation (A1, A2, A3) déphasés pour la commutation d'un moteur électrique (10) à à plusieurs branches, caractérisé par le fait qu'un premier signal (K1) est obtenu lors d'une première comparaison entre les deux signaux de capteur (S1, S2), que lors d'une deuxième comparaison entre l'un des deux signaux de capteur (S1 ou S2) et l'autre des deux signaux de capteur (S2 ou S1) décalé en tension selon une certaine valeur de tension continue obtient (D1, D2), on produit un deuxième signal (K2, K3) qui est déphasé selon une certaine valeur par rapport au premier signal (K1), et que la comparaison est effectuée de telle façon que le premier ou le deuxième signal présente une première valeur logique du signal pendant une valeur positive de la différence résultant de la comparaison et présente une deuxième valeur logique du signal pendant une valeur négative de la différence.

**2.** Procédé selon la revendication 1, caractérisé par le fait que les signaux d'excitation (A) avec lesquels le moteur est commandé sont déterminés par des moyens d'excitation qui sont alimentés par une tension (V1) pour l'essentiel non régulée.

**3.** Procédé selon la revendication 1 ou 2, caractérisé par le fait que le moteur électrique est excité par des signaux qui sont réalisés sous la forme de signaux cycliques comme, par exemple, des signaux d'impulsions modulées en largeur ou d'impulsions modulées en durée.

**4.** Procédé selon l'une des revendications 1 à 3, caractérisé par le fait que les différents moments de production des signaux de commande (SP) sont corrigés sur la base d'une ou plusieurs grandeurs de correction, lesquelles représentent une indication des décalages dans le temps et/ou en fonction de l'angle de rotation des signaux de capteur.

**5.** Procédé selon la revendication 4, caractérisé par le fait qu'il existe un premier signal de capteur (S1) ayant une résolution grossière de la position de rotation et un deuxième signal de capteur (S2) ayant une résolution précise de la position de rotation, le premier signal de capteur (S1) étant utilisé pour déterminer quelle branche du moteur est alimentée avec quel courant, et le deuxième signal de capteur (S2) servant à la correction dans le temps et/ ou en fonction de l'angle de rotation.

**6.** Procédé selon la revendication 4 ou 5, caractérisé par le fait que la valeur de la grandeur de correction dépend du sens de rotation du moteur.

**7.** Procédé selon l'une des revendications 1 à 6, caractérisé par le fait que la valeur de la grandeur de correction peut être définie de façon fixe et/ou est déterminée sur la base de la régulation d'une grandeur opérationnelle.

**8.** Procédé selon la revendication 7, caractérisé par le fait que la grandeur opérationnelle est la valeur du courant avec lequel le moteur est alimenté et que celle-ci est réglée de façon à ce qu'elle corresponde à la valeur maximale du rendement.

**9.** Dispositif pour réguler la vitesse de rotation et/ou la position d'un moteur électrique (10) au moyen d'un capteur à effet Hall (12), lequel délivre à ses bornes deux signaux de capteur (S1, S2) oscillant en opposition de phase autour d'une valeur moyenne (M) commune, desquels sont dérivés des signaux d'excitation (A1, A2, A3) déphasés pour la commutation d'un moteur électrique (10) à à plusieurs branches, caractérisé par le fait qu'un premier comparateur (15) est prévu pour former un premier signal (K1) à partir des deux signaux de capteur (S1, S2), qu'un deuxième comparateur (20, 21) est prévu pour former un deuxième signal (K2, K3) par une comparaison entre l'un des deux signaux de capteur (S1 ou S2) et l'autre des deux signaux de capteur (S2 ou S1), décalé en tension d'une certaine valeur de tension continue (D1, D2) le deuxième signal (K2, K3) étant déphasé selon une certaine valeur par rapport au premier signal (K1) et que les comparateurs (15, 20, 21) agissent de telle façon que le premier ou le deuxième signal présente une première valeur logique du signal pendant une valeur positive de la différence résultant de la comparaison et présente une deuxième valeur logique du signal pendant une valeur négative de la différence.

**10.** Dispositif selon la revendication 9, caractérisé par le fait qu'une tension d'alimentation (V1) destinée à alimenter le dispositif est pour l'essentiel non régulée.

**11.** Dispositif selon la revendication 10, caractérisé par le fait que plusieurs moteurs (110) sont excités dont

- un premier moteur (110.a) qui sert à charger un cassette munie d'une bande de données,
- un deuxième moteur (110.b) qui sert à la rotation d'une tête d'enregistrement et/ou de lecture et
- un troisième moteur (110.c) qui sert au transport de la bande de données de la cassette.

**12.** Dispositif selon l'une des revendications 9 à 11, caractérisé par le fait que le dispositif présente les moyens suivants :

- un ou plusieurs capteurs (214, 215) qui détectent la vitesse de rotation et/ou la position de rotation du moteur, et
- un moyen de commande (216) qui, sur la base des signaux de capteur en provenance des capteurs (214, 215), détermine le moment auquel sont produits les signaux de commande (SP) qui servent à réaliser les signaux d'excitation (A) du moteur,

 et que les moyens de commande (216) corrigent les différents moments de production des signaux de commande (SP) en fonction d'une ou plusieurs grandeurs de correction (K), lesquelles sont une indication des décalages dans le temps et/ou en fonction de l'angle de rotation des signaux de capteur.

**13.** Dispositif selon la revendication 12, caractérisé par le fait qu'un premier capteur (214) produit un premier signal de capteur (S1) ayant une résolution grossière de la position de rotation, qu'un deuxième capteur (215) produit un deuxième signal de capteur (S2) ayant une résolution précise de la position de rotation, et que le moyen de commande (216) détermine sur la base du premier signal de capteur (S1), quelle branche du moteur est alimentée avec quel courant et, sur la base du deuxième signal de capteur (S2), effectue des corrections dans le temps et/ ou en fonction de l'angle de rotation.

**14.** Dispositif selon la revendication 12 ou 13, caractérisé par le fait que la valeur de la grandeur de correction est dépendante du sens de rotation du moteur.

15. Dispositif selon l'une des revendications 12 à 14, caractérisé par le fait qu'un moyen de mémorisation (221) est prévu, dans lequel peut être enregistrée une valeur préalablement définie de la grandeur de correction.

16. Dispositif selon l'une des revendications 12 à 15, caractérisé par le fait qu'un capteur de grandeur opérationnelle (218) est prévu, lequel détecte une grandeur opérationnelle du moteur (210), et que des moyens sont prévus qui régulent la grandeur opérationnelle et, de ce fait, déterminent la valeur de la grandeur de correction.

FIG.1

FIG.2

FIG. 3

FIG. 4a

FIG.4b

17

FIG. 5

FIG. 6a

FIG. 6b

FIG. 7

FIG. 8

FIG.9

FIG. 10